# EUROPÄISCHE PATENTANMELDUNG

(11) **EP 1 101 992 A2**
(43) Veröffentlichungstag der Anmeldung: **23.05.2001**
(21) Anmeldenummer: 00811061.1
(22) Anmeldetag: 10.11.2000
(51) Int. Cl.: F16L 5/02

(54) **Dichtungszylinder**

(30) Priorität: 19.11.1999 DE 19955762
(71) Anmelder: HILTI Aktiengesellschaft, 9494 Schaan (LI)
(72) Erfinder: Kögler, Markus, 86807 Buchloe (DE); Huber, Silvia, 86356 Neusäss (DE); Heimpel, Franz, 86444 Affing (DE); Vogel, Peter, 86836 Untermeitingen (DE)
(74) Vertreter: Wildi, Roland

(57) **Zusammenfassung**

Die Erfindung bezieht sich auf einen Dichtungszylinder (5), etwa zum Abdichten eines Hohlraums (4) zwischen einer in einem Bauelement (1) vorhandenen zylindrischen Durchführung (2) und wenigstens einem die Durchführung (2) durchragenden Gegenstand (3), wobei der Dichtungszylinder (5) in diesem Fall in den Hohlraum (4) einsetzbar ist, wenigstens eine in Zylinderlängsrichtung verlaufende Durchgangsöffnung (6) aufweist und ganz oder teilweise aus bei Zutritt von Feuchtigkeit bzw. Flüssigkeit quellfähigem Material besteht.

## Beschreibung

Die Erfindung betrifft einen Dichtungszylinder gemäß dem Patentanspruch 1.

Abdichtungen sind zum Beispiel im Bereich von Hauseinführungen erforderlich, bei denen Rohre oder Kabel von außen nach innen durch Öffnungen in Wänden hindurchgeführt werden. Ein hierbei sich ergebender Ringspalt zwischen Rohr bzw. Kabel und Wand kann dabei auf unterschiedliche Weise abgedichtet werden.

Zu diesem Zweck kommen zum Beispiel mechanische Abdichtungen in Frage. Hierbei füllen feste Dichtelemente den Spalt aus und dichten über Formschluß oder durch elastische Verpressung zum Untergrund ab. Auch chemische Abdichtungen können zum Einsatz kommen. Hier wird der Ringspalt mit reaktiven Systemen ausgefüllt, die aushärten und die Durchführung verschließen. Reaktive Systeme der genannten Art können zum Beispiel anorganische Systeme sein, zum Beispiel Mörtel oder organische Systeme, etwa Dichtmassen, Polymerschäume, usw.. Nicht zuletzt können auch chemisch-mechanische Abdichtungen eingesetzt werden. Hierbei wird in der Regel eine mechanische Verschalung vorgenommen, die dann ein chemisches Füllsystem der oben genannten Art aufnimmt.

Mechanische Lösungen sind allerdings teuer, zeit- und arbeitsaufwendig bei der Installation und darüber hinaus auf bestimmte Rohr-, Kabel- und Durchführungsdurchmesser fixiert. Chemische Lösungen, also das Ausfüllen des Ringspalts mit Dichtmassen, Schäumen, Mörtel, und dergleichen, haben diese Nachteile nicht, gewährleisten jedoch häufig keine dauerhafte Abdichtung insbesondere gegen Eintreten von Wasser.

Der Erfindung liegt die Aufgabe zugrunde, eine weitere Abdichteinrichtung bereitzustellen, die einfach herzustellen, schnell und einfach zu installieren und darüber hinaus dauerhaft dicht gegen Feuchtigkeit bzw. Flüssigkeiten ist, insbesondere gegen den Eintritt von Wasser.

Gemäß Patentanspruch 1 wird erfindungsgemäß ein Dichtungszylinder zum Abdichten einer in einem Bauelement vorhandenen zylindrischen Durchführung zur Verfügung gestellt, wobei der Dichtungszylinder in die Durchführung einsetzbar ist und ganz oder teilweise aus bei Zutritt von Feuchtigkeit oder Flüssigkeit quellfähigem Material besteht.

Der Dichtungszylinder dichtet zunächst gegen Staub und Schmutz ab und sorgt somit schon aufgrund seiner Verpressung mit dem Bauelement für eine gute Abdichtung der Durchführung. Bei Zutritt von Feuchtigkeit oder Flüssigkeit quillt das Material des Dichtungszylinders auf, so daß sich seine Dichtwirkung weiter erhöht und somit die Durchführung auch feuchtigkeits- bzw. flüssigkeitsdicht verschlossen wird.

Der Dichtungszylinder kann zum Beispiel als Blindstopfen ausgebildet sein und etwa zum Abdichten einer ungenutzten Maueröffnung dienen, durch die kein strangförmiger Gegenstand hindurchgeführt worden ist. Nach einer anderen Ausgestaltung der Erfindung kann der Dichtungszylinder aber auch wenigstens eine in Zylinderlängsrichtung verlaufende Durchgangsöffnung zur Aufnahme eines die Durchführung durchragenden Gegenstandes aufweisen und in einen zwischen der Durchführung und dem Gegenstand liegenden Hohlraum einsetzbar sein. Somit läßt sich auch ein Zwischenraum zwischen dem wenigstens einen die Durchführung durchragenden Gegenstand und der Innenwandung der Durchführung flüssigkeitsdicht verschließen.

Sofern der Dichtungszylinder nach einer Ausgestaltung der Erfindung einstückig ausgebildet ist, kann er wie beim Setzen eines Dübels in eine in einem Bauelement vorhandene zylindrische Durchführung passend eingesetzt werden, wozu er auch elastisch ausgebildet sein kann, um diesen Einsetzvorgang zu erleichtern. Soll er strangförmige Gegenstände aufnehmen, werden diese zum Beispiel anschließend durch eine oder mehrere im Dichtungszylinder vorhandene Durchgangsöffnungen, ggf. unter Verwendung eines Gleitmittels hindurchgeführt. Das Material des Dichtungszylinders liegt dabei eng an den strangförmigen Gegenständen an, so daß auch hier eine dauerhafte Abdichtung sichergestellt ist. Dadurch ist die Montage vollzogen. Eine andere Möglichkeit der Montage besteht darin, den oder die strangförmigen Gegenstände zunächst durch den Dichtungszylinder hindurchzuziehen und diesen dann gemeinsam mit den strangförmigen Gegenständen in die zylindrische Durchführung einzubringen.

Bildet sich später im Bereich des Dichtungszylinders Feuchtigkeit aus oder kommt der Dichtungszylinder gar mit einer Flüssigkeit in Kontakt, so beginnt das Material des Dichtungszylinders aufzuquellen, was eine Ausdehnung des Dichtungszylinders auch in Richtung zum strangförmigen Gegenstand nach sich zieht, so daß durch Verpressung eine Dichtheit erzielt wird, die auch gegen drückende Flüssigkeit, etwa Wasser, standhält. Das Aufquellen des Materials des Dichtungszylinders könnte auch schon bei der Montage selbst initiiert werden, indem der Dichtungszylinder kurz vor oder nach seiner Montage mit entsprechender Flüssigkeit in Kontakt gebracht wird. Vorzugsweise wird das Material des Dichtungszylinders so gewählt, daß es bei Kontakt mit Wasser zu quellen beginnt. Prinzipiell könnte der Quellprozeß aber auch durch andere Flüssigkeiten initiiert werden, falls Dichtungszylinder der genannten Art in entsprechender Umgebung eingesetzt werden sollen.

Die durch den Dichtungszylinder in dessen Axialrichtung hindurchlaufenden strangförmigen Gegenstände können jeden beliebigen Querschnitt aufweisen, etwa mehrkantige oder kreisförmige Querschnitte. Die Durchgangsöffnungen im Dichtungszylinder weisen dann entsprechende Querschnitte auf, die so gewählt sind, daß das Material des Dichtungszylinders eng und dicht am strangförmigen Gut anliegt, auch wenn es noch nicht aufgequollen ist.

Nach einer sehr vorteilhaften Weiterbildung der Erfindung kann der Dichtungszylinder aus mehreren in seiner Umfangsrichtung nebeneinanderliegenden Zylindersegmenten zusammengesetzt sein.

So kann er zum Beispiel aus zwei halbschalenförmigen Zylindersegmenten bestehen, aus drei sich in Umfangsrichtung um jeweils 120 Grad erstreckenden Zylindersegmenten, usw.. Weist der Dichtungszylinder in seinem Zentralbereich zum Beispiel nur eine einzige Durchgangsöffnung auf, die einen runden oder anders gearteten Querschnitt besitzen kann, so lassen sich nach Einsetzen des strangförmigen Gegenstandes in die Durchführung des Bauwerks die Zylindersegmente in einfacher Weise in die verbleibenden seitlichen Hohlräume einschieben, was die Montage des Dichtungszylinders erheblich vereinfacht, insbesondere bei strangförmigem Gut mit größerem Querschnitt. Der wesentliche Vorteil dieser Ausführungsform liegt aber darin, daß auch bei sehr langen und schon in der Durchführung vorhandenen Gegenständen, etwa bei schon verkabelten elektrischen Leitungen oder verschweißten Rohren, sich die jeweilige Durchführung noch mit Hilfe des aus Zylindersegmenten zusammengesetzten Dichtungszylinders abdichten läßt. Die Zylindersegmente liegen dabei dicht aneinander sowie dicht an der Umfangswandung der Durchführung und am strangförmigen Gut, so daß auch hier eine sehr gute Abdichtung erhalten wird, insbesondere auch bei Eintritt von Flüssigkeiten, da jetzt das Material der Zylindersegmente zu quellen beginnt und für einen noch festeren Verschluß sorgt.

Soll sich der aus den Zylindersegmenten zusammengesetzte Dichtungszylinder zum Durchtritt mehrerer strangförmiger Gegenstände eignen, so können sich die jeweiligen Durchgangsöffnungen in jeweils einem der Zylindersegmente befinden. In diesem Falle könnten die Zylindersegmente getrennt auf die jeweiligen strangförmigen Gegenstände aufgeschoben oder diese nach Einsetzen der Zylindersegmente in die Durchführung durch die Durchgangsöffnungen hindurchgeführt werden.

Eine jeweilige der Durchgangsöffnungen kann aber auch durch einander angrenzende Ausschnitte in benachbarten Zylindersegmenten gebildet sein, so daß sich auch jetzt wiederum Durchführungen abdichten lassen, in denen bereits längere und schon verkabelte Leitungen oder verschweißte Rohre, usw., befinden.

Nach einer Ausgestaltung der Erfindung können der Dichtungszylinder bzw. seine Zylindersegmente aus einem quellfähigen Kunststoff hergestellt sein, der insbesondere bei Kontakt mit Wasser zu quellen beginnt. Es kann sich hier um einen Kunststoff handeln, der durch Zusatz von quellfähigen Materialien quellfähig gemacht wird.

Nach einer noch anderen Ausgestaltung der Erfindung können der Dichtungszylinder bzw. seine Zylindersegmente aus quellfähigem Gummi bestehen. Der Gummi wird dadurch quellfähig gemacht, insbesondere bei Kontakt mit Wasser, daß ihm geeignete quellfähige Polymere zugesetzt werden, wie zum Beispiel in der US 4,532,298 beschrieben.

Nach einer noch weiteren Ausgestaltung der Erfindung sind der Dichtungszylinder bzw. seine Zylindersegmente außenumfangsseitig mit einer oder mehreren axial voneinander beabstandeten umlaufenden Dichtlippen versehen, die den Dichtungszylinder bzw. die Zylindersegmente zunächst im Innern der zylindrischen Durchführung gegen deren Umfangswandung abstützen und somit den bzw. die strangförmigen Gegenstände in der Durchführung positionieren. Diese Dichtlippen können auch schon elastisch gegen die Innenwandung der Durchführung drücken, um schon zum gewissen Teil Dichtwirkung zu erzielen. Sie sind aber auch deswegen vorhanden, um den Abdichtzylinder bzw. seine Zylindersegmente durch Einsatz von weniger Material herstellen zu können, da zwischen den Dichtlippen Hohlräume verbleiben können. Der Dichtungszylinder bzw. seine Zylindersegmente werden somit billiger in der Herstellung.

Der Dichtungszylinder bzw. seine Zylindersegmente können darüber hinaus an ihren Stirnseiten einen Flansch aufweisen, der die Dichtlippen radial nach außen überragt. Insofern ergibt sich ein Anschlag, bis zu dem der Dichtungszylinder bzw. die Zylindersegmente in die Durchführung eingesetzt werden können, wodurch sich eine sichere Positionierung von Dichtungszylinder bzw. Zylindersegmenten bei der Montage ergibt. Der Flansch kann an seiner zur Maueraußenseite weisenden Fläche auch einen Klebestreifen, zum Beispiel einen Butylklebestreifen tragen, der eine dichte Befestigung an der Maueraußenseite ermöglicht.

Vorzugsweise können der Dichtungszylinder bzw. seine Zylindersegmente als Spritzgußteile hergestellt werden.

Nach einer sehr vorteilhaften Weiterbildung der Erfindung enthalten der Dichtungszylinder bzw. seine Zylindersegmente Fasern, die im Innern von Dichtungszylinder bzw. Zylindersegmenten in Axialrichtung des Zylinders verlaufen. Diese Fasern können zum Beispiel Fasern aus Kunststoff oder metallische Fasern sein. Durch diese Fasern wird die Volumenvergrößerung für eine radiale Verpressung beim Quellen des Dichtungszylinders bzw. seiner Zylindersegmente vorgegeben. Die Fasern verhindern somit weitestgehend eine Ausdehnung des Abdichtzylinders bzw. seiner Zylindersegmente in Axialrichtung des Zylinders und sorgen dafür, daß sich beim Quellen das Material in Radialrichtung des Zylinders bewegt.

Der Dichtungszylinder bzw. die ihn bildenden Zylindersegmente können nach einer noch anderen Ausgestaltung der Erfindung auch einen sich außen bzw. axial konisch verjüngenden Grundkörper aufweisen, was den Vorteil hat, daß er somit besser zur Abdichtung von Durchführungen mit unterschiedlichen Durchmessern geeignet ist.

Ausführungsbeispiele der Erfindung werden nachfolgend unter Bezugnahme auf die Zeichnung näher erläutert. Es zeigen:
**Figur 1** einen in eine Durchführung eingesetzten Dichtungszylinder nach der Erfindung;
**Figur 2** den Dichtungszylinder nach Figur 1 mit eingesetztem zylindrischen Gegenstand;
**Figur 3** einen Axialschnitt durch die Anordnung nach Figur 2;
**Figur 4** einen aus zwei Halbschalen bestehenden Dichtungszylinder mit einer zentralen Durchgangsöffnung;
**Figur 5** einen einstückigen Dichtungszylinder mit zwei im Abstand nebeneinanderliegenden Durchgangsöffnungen;
**Figur 6** einen aus drei Zylindersegmenten zusammengesetzten Dichtungszylinder mit drei Durchgangsöffnungen für strangförmiges Gut; und
**Figur 7** einen als Blindstopfen ausgebildeten Dichtungszylinder.

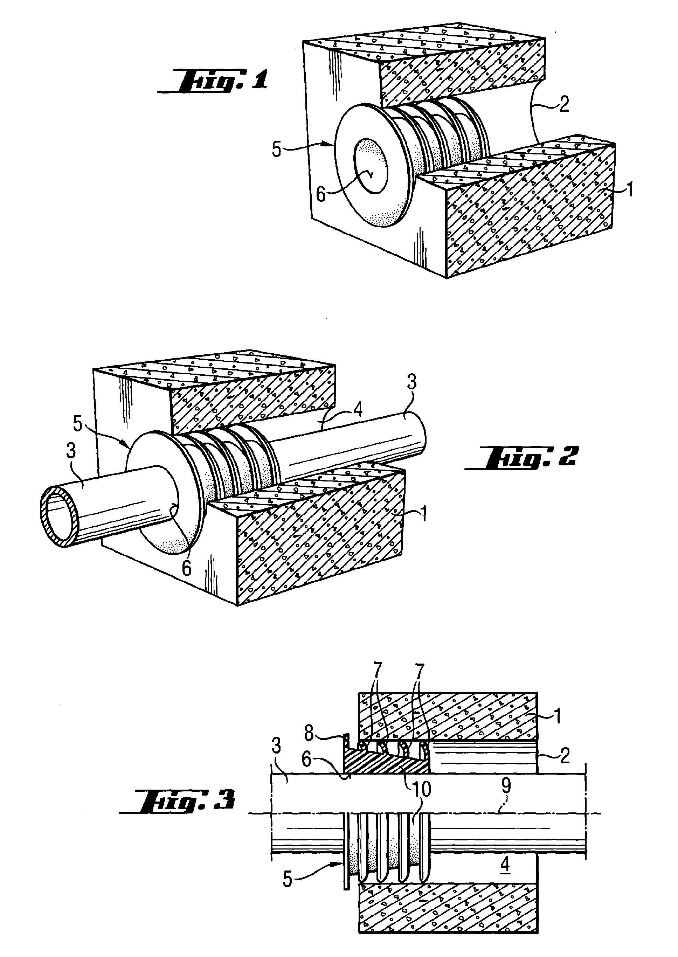

Wie in Figur 1 zu erkennen ist, befindet sich innerhalb eines Bauelements 1, das zum Beispiel die Wand eines Gebäudes sein kann, eine zylindrische Durchführung 2 bzw. Bohrung. In diese zylindrische Durchführung 2 ist von einer Seite des Bauelements 1 aus ein erfindungsgemäßer Dichtungszylinder passgenau eingesetzt. Er wird nach Art eines Dübels in die Durchführung 2 eingeführt. Der Dichtungszylinder ist im vorliegenden Fall einstückig ausgebildet.

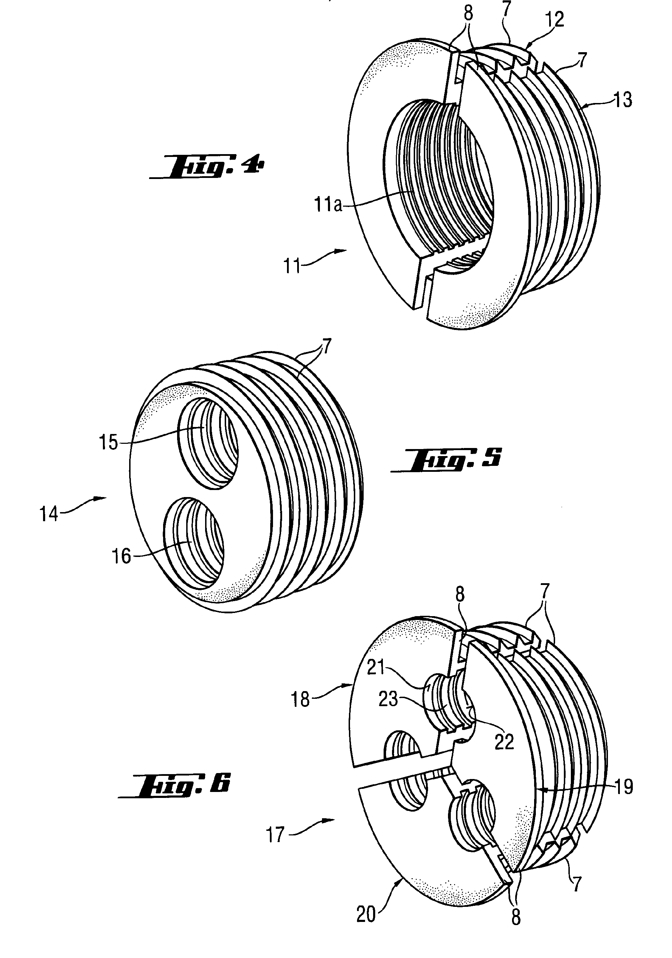

Die Figur 2 zeigt einen Zustand, bei dem in eine zentrale Zylinderdurchgangsöffnung 6 des Dichtungszylinders 5 ein zylindrischer Gegenstand 3, hier ein Rohr, passgenau eingeführt worden ist.

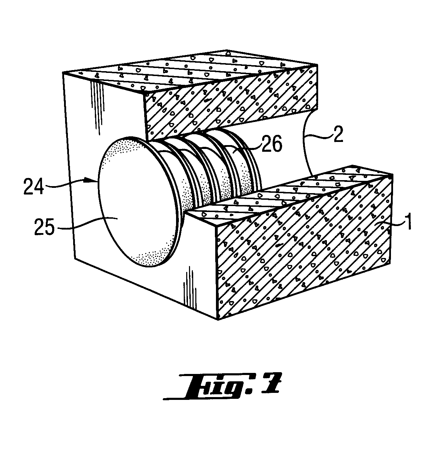

Die Verhältnisse sind anhand der Figur 3 deutlicher zu erkennen, die einen Axialschnitt durch die Anordnung nach Figur 2 zeigt. Der Dichtungszylinder 5 weist an seiner Außenseite umlaufend vier axiale im Abstand voneinander angeordnete Dichtlippen 7 auf, die kreisförmig ausgebildet sind, also praktisch über den gesamten Umfang des Dichtungszylinders 5 herumlaufen. Diese Dichtlippen 7 drücken bereits beim Einsetzen des Dichtungszylinders 5 in die Durchführung 2 elastisch gegen die Innenumfangswand der Durchführung 2 und erzielen somit schon eine gewisse Dichtwirkung, aber auch eine Abstützwirkung hinsichtlich des Gegenstandes 3. Ein stirnseitiger und links in Figur 3 am Dichtungszylinder 5 vorhandener Flansch 8 soll verhindern, daß der Dichtungszylinder 5 zu weit in die Durchführung 2 eingeschoben wird. Er hat in Figur 3 noch nicht seine Endstellung erreicht.

Wie in Figur 3 zu erkennen ist, besteht der Dichtungszylinder 5 aus einem . Grundkörper 10, der sich nach rechts in Figur 3 außen konisch verjüngt. Jedoch bleibt der Innendurchmesser der zentralen Durchgangsöffnung 6 konstant. Sämtliche Dichtlippen 7 weisen ebenfalls den gleichen Außendurchmesser auf. Die konische Verjüngung des Grundkörpers 10 hat den Vorteil, daß der hier einstückig ausgeführte Dichtungszylinder 5 für Durchführungen 2 mit verschiedenen Innendurchmessern verwendet werden kann. Er läßt sich dann je nach Innendurchmesser der Durchführung 2 mehr oder weniger weit in diese hineinschieben, sorgt aber dennoch für eine sehr gute Abdichtung auch gegenüber Flüssigkeiten, da die Dichtlippen 7 stets infolge des Aufquellvorgangs des Dichtungszylinders 5 fest mit der Innenwandung der Durchführung 2 verpreßt werden.

Der Dichtungszylinder 5 besteht, wie bereits erwähnt, aus quellfähigem Material, das dann quillt, wenn es mit Flüssigkeit in Kontakt kommt, etwa mit Feuchtigkeit bzw. Wasser. In diesem Fall dehnt sich der Dichtungszylinder 5 im wesentlichen in Radialrichtung aus, also senkrecht zur Längsachse 9 der zentralen Durchgangsöffnung 6, so daß die Dichtlippen 7 noch stärker gegen die Umfangsoberfläche der Durchführung 2 gepreßt werden und damit den Ringspalt 4 vollständig abdichten. Gleichzeitig wird der Dichtungszylinder 5 auch gegen den Gegenstand 3 gepreßt, um auch für diesen Bereich eine gute Abdichtung zu erhalten.

Die Radialausdehnung des Dichtungszylinders 5 bei dessen Aufquellen wird dadurch bestimmt, daß sich in seinem Innern Fäden befinden, die sich in Längsrichtung der Zentralachse 9 der Durchgangsöffnung 6 erstrecken. Diese Fäden, die zum Beispiel Fäden oder Fasern aus Kunststoff oder metallische Fäden oder Fasern sein können, verhindern zu einem großen Teil eine Axialausdehnung des Dichtungszylinders 5 und bestimmen somit die Richtung der Volumenvergrößerung des Dichtungszylinders 5 in Radialrichtung und damit die Stärke der radialen Verpressung.

Die Figur 4 zeigt einen weiteren Dichtungszylinder 11, der aus zwei Halbschalen 12 und 13 besteht, ansonsten aber dem Dichtungszylinder 5 in den Figuren 1 bis 3 gleicht. Die Halbschalen 12, 13 erstrecken sich jeweils in Umfangsrichtung gesehen um 180 Grad. Sie sind wiederum mit den bereits beschriebenen Flanschen 8 und den Dichtketten 7 versehen und bilden zusammen eine zylindrische Durchgangsöffnung 11a.

Ein anderer Dichtungszylinder 14 ist in Figur 5 dargestellt. Er ist einstückig ausgebildet und weist lediglich an seinem äußeren Umfangsbereich die bereits beschriebenen Dichtlippen 7 auf. In Zylinderlängsrichtung befinden sich in seinem Innern zwei Durchgangsöffnungen 15 und 16, die kreisförmigen Querschnitt besitzen. Sie liegen im Abstand nebeneinander.

Die Figur 6 zeigt einen Dichtungszylinder 17, der dem nur zwei Zylindersegmente 12a, 13b aufweisenden Dichtungszylinder 11 entspricht, jetzt aber drei Zylindersegmente 18, 19 und 20 aufweist. Die jeweiligen Zylindersegmente 18, 19 und 20 erstrecken sich in Umfangsrichtung über einen Winkelbereich von 120 Grad und sind ansonsten wieder mit dem bereits erwähnten Flansch 8 und außenumfangsseitig mit den bereits genannten Dichtlippen 7 ausgestattet. An gegenüberliegenden Seiten jeweils zweier der nebeneinanderliegenden Zylindersegmente befinden sich Ausschnitte bzw. halbkreisförmige Ausnehmungen 21, 22, die im zusammengesetzten Zustand der Zylindersegmente zum Dichtungszylinder 17 jeweils eine Durchgangsöffnung 23 bilden. Insgesamt sind drei Durchgangsöffnungen 23 vorhanden, die in Umfangsrichtung um 120 Grad voneinander beabstandet sind.

Bei sämtlichen der genannten einstückigen Zylinder sowie auch bei allen aus mehreren Zylindersegmenten zusammengesetzten Zylindern können sich an den Innenwänden der Durchgangsöffnungen weitere Dichtlippen befinden, um dort die Abdichtwirkung zu verbessern.

Die Figur 7 zeigt einen als Dichtstopfen ausgebildeten Dichtungszylinder nach der Erfindung. Er trägt das Bezugszeichen 24 und besteht aus einer geschlossenen Stirnwand 25 und einem sich daran anschließenden zylindrischen Ansatz 26. Der zylindrische Ansatz 26 kann als Vollzylinder oder Hohlzylinder ausgebildet sein und ist einstückig mit der Stirnwand 25 verbunden. Die Stirnwand 25 weist also keine Durchgangsöffnung auf und dient somit zusammen mit dem Ansatz 26 als Verschluß für die Durchführung 2, durch die keine strangförmigen Gegenstände hindurchgeführt sind. Der Durchmesser der Stirnwand 25 ist wiederum so gewählt, daß er größer ist als der Innendurchmesser der Durchführung 2. Dadurch ergibt sich ein Außenflansch zur Positionierung des Dichtungszylinders 24 in der Durchführung 2, wie bereits eingangs erwähnt. Ansonsten kann der Dichtungszylinder 24 in der gleichen Weise wie der Dichtungszylinder 5 gemäß den Figuren 1 bis 3 aufgebaut sein.

Das Material, aus dem die Dichtungszylinder bzw. Zylindersegmente gemäß den Figuren 4 bis 7 aufgebaut sind, entspricht demjenigen, aus dem auch der Dichtungszylinder 5 hergestellt ist.

## Patentansprüche

1. Dichtungszylinder (5; 11; 14; 17; 24) zum Abdichten einer in einem Bauelement (1) vorhandenen zylindrischen Durchführung (2), wobei der Dichtungszylinder in die Durchführung (2) einsetzbar ist und ganz oder teilweise aus bei Zutritt von Feuchtigkeit oder Flüssigkeit quellfähigem Material besteht.

2. Dichtungszylinder nach Anspruch 1, **dadurch gekennzeichnet,** daß er wenigstens eine in Zylinderlängsrichtung verlaufende Durchgangsöffnung (6; 11a, 15, 16; 23) zur Aufnahme eines die Durchführung (2) durchragenden Gegenstands (3) aufweist und in einen zwischen der Durchführung (2) und dem Gegenstand (3) liegenden Hohlraum (4) einsetzbar ist.

3. Dichtungszylinder nach Anspruch 1 oder 2, **dadurch gekennzeichnet,** daß er (5; 14) einstückig ausgebildet ist.

4. Dichtungszylinder nach Anspruch 1 oder 2, **dadurch gekennzeichnet,** daß er (11; 17) aus mehreren in seiner Umfangsrichtung nebeneinanderliegenden Zylindersegmenten (12a, 13b; 18, 19, 20) zusammengesetzt ist.

5. Dichtungszylinder nach Anspruch 4, **dadurch gekennzeichnet,** daß sich eine jeweilige der Durchgangsöffnungen vollständig in jeweils einem der Zylindersegmente befindet.

6. Dichtungszylinder nach Anspruch 4, **dadurch gekennzeichnet,** daß eine jeweilige der Durchgangsöffnungen (23) durch einander angrenzende Ausschnitte (21, 22) in benachbarten Zylindersegmenten (18, 19) gebildet ist.

7. Dichtungszylinder nach einem der Ansprüche 2 bis 6, **dadurch gekennzeichnet,** daß die Querschnittsform der Durchgangsöffnungen kreisförmig ist.

8. Dichtungszylinder nach einem der Ansprüche 1 bis 7, **dadurch gekennzeichnet,** daß er oder seine Zylindersegmente aus quellfähigem Kunststoff bestehen.

9. Dichtungszylinder nach einem der Ansprüche 1 bis 76, **dadurch gekennzeichnet,** daß er oder seine Zylindersegmente aus quellfähigem Gummi bestehen.

10. Dichtungszylinder nach einem der Ansprüche 1 bis 9, **dadurch gekennzeichnet,** daß er oder seine Zylindersegmente außenumfangsseitig eine oder mehrere axial voneinander beabstandete Dichtlippen (7) aufweisen.

11. Dichtungszylinder nach einem der Ansprüche 1 bis 10, **dadurch gekennzeichnet,** daß er oder seine Zylindersegmente stirnseitig einen Flansch (8) aufweisen, der die Durchführung (2) überragt.

12. Dichtungszylinder nach Anspruch 10 oder 11, **dadurch gekennzeichnet,** daß er oder seine Zylindersegmente einen sich außen bzw. axial konisch verjüngenden Grundkörper (10) aufweisen.

13. Dichtungszylinder nach einem der Ansprüche 1 bis 12, **dadurch gekennzeichnet,** daß er oder seine Zylindersegmente in Axialrichtung verlaufende Fasern enthalten.
